# EUROPEAN PATENT SPECIFICATION

(11) **EP 3 125 639 B1**
(45) Date of publication and mention of the grant of the patent: **30.11.2022**
(21) Application number: 14886678.3
(22) Date of filing: 31.12.2014
(51) Int. Cl.: H04W 76/00, H04W 76/19, H04W 84/04

(54) **COMMUNICATION CONTROL METHOD, DEVICE AND SYSTEM FOR MOBILE TERMINAL**
KOMMUNIKATIONSSTEUERUNGSVERFAHREN, -VORRICHTUNG UND -SYSTEM FÜR MOBILES ENDGERÄT
PROCÉDÉ, DISPOSITIF ET SYSTÈME DE COMMANDE DE COMMUNICATION POUR UN TERMINAL MOBILE

(30) Priority: 28.03.2014 CN 201410123057
(43) Date of publication of application: 01.02.2017
(73) Proprietor: China Mobile Communications Corporation, Beijing 100032 (CN)
(72) Inventor: LIU, Yunlu, Beijing 100032 (CN); CHEN, Zhuo, Beijing 100032 (CN); JIANG, Xiaowei, Beijing 100032 (CN)
(74) Representative: Hertin und Partner Rechts- und Patentanwälte PartG mbB
(86) International application number: PCT/CN2014/095972
(87) International publication number: WO 2015/143914

(56) References cited:
- WO-A1-2013/091161
- CN-A- 102 685 785
- CN-A- 103 581 941
- CN-A- 103 581 942
- CN-A- 103 581 942
- CN-A- 103 582 164
- US-A1- 2011 019 644
- ERICSSON: "Secondary Radio Link Failure (S-RLF)", 3GPP DRAFT; R2-141542 - SECONDARY RADIO LINK FAILURE (S-RLF), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 22 March 2014 (2014-03-22), pages 1-5, XP050792702, Retrieved from the Internet: URL:http://www.3gpp.org/ftp/Meetings_3GPP_ SYNC/RAN2/Docs/ [retrieved on 2014-03-22]
- QUALCOMM INCORPORATED: "On RLF and RLM requirements for the special SCell", 3GPP DRAFT; R2-141672_S-RLM IN DUAL_CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 22 March 2014 (2014-03-22), pages 1-3, XP050792806, Retrieved from the Internet: URL:http://www.3gpp.org/ftp/Meetings_3GPP_ SYNC/RAN2/Docs/ [retrieved on 2014-03-22]
- BROADCOM CORPORATION: "Mobility robustness with dual connectivity", 3GPP DRAFT; R2-133531, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 28 September 2013 (2013-09-28), pages 1-6, XP050719243, Retrieved from the Internet: URL:http://www.3gpp.org/ftp/tsg_ran/WG2_RL 2/TSGR2_83bis/Docs/ [retrieved on 2013-09-28]
- "3rd Generation Partnership Project; Technical Specification Group Radio Access Network; Evolved Universal Terrestrial Radio Access (E-UTRA); Study on Small Cell Enhancements for E-UTRA and E-UTRAN - Higher layer aspects (Release", 3GPP DRAFT; 36842-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 20 December 2013 (2013-12-20), pages 1-68, XP050752375, Retrieved from the Internet: URL:http://www.3gpp.org/ftp/tsg_ran/WG2_RL 2/R2_TSs_TRs_early_versions/TR36.842_Small _cell_enh/v1.0.0/ [retrieved on 2013-12-20]

## Description

### TECHNICAL FIELD

The present disclosure relates to the field of mobile communication, and in particular to a mobile terminal communication control method performed by the macro cell, a control device connected to a mobile terminal and a mobile communication system.

### BACKGROUND

According to a statistics result of cell network at present, a majority of audio service and data service are indoors, which are 60% and 70% respectively, and it is anticipated that the data service may increase rapidly in the future, which may increases by 1000 times in the coming 10 years, where the indoor service may occupy 90% of the total service volume. Therefore, the coverage mode of the cell network in the related art may not meet the requirement of the rapidly increased indoor and hot spot radio data service. For example, a limitation of radio access of the conventional 2G and 3G network become obvious, and acquisition of a base station address and antenna feeder resource is becoming more difficult, a base station interval in a city area with a dense population reaches a theory limit, so a deployment of a conventional macrocell base station cannot be supported. An operation and deployment cost of the macrocell is high, so a networking by adding new macrocell is difficult.

At present, a small cell technology is introduced for the development of the hotspot and indoor data service. In the communication industry, a cell in a coverage area of a Pico base station and a femtocell defined in the standard is called the small cell. The small cell has the advantages such as being capable of managing interference, starting a node automatically, sharing a core network and a net management system with the cellular network, so the deployment and the management thereof are simple, which has been a main technology of improving the indoor and hotspot data service coverage.

After the concept of the small cell is introduced, a mobile terminal may access a macrocell and a small cell simultaneously, i.e., the mobile terminal is in a double connection mode, so as to communicate via the macrocell and the small cell simultaneously, thereby improving a network throughput and a communication quality.

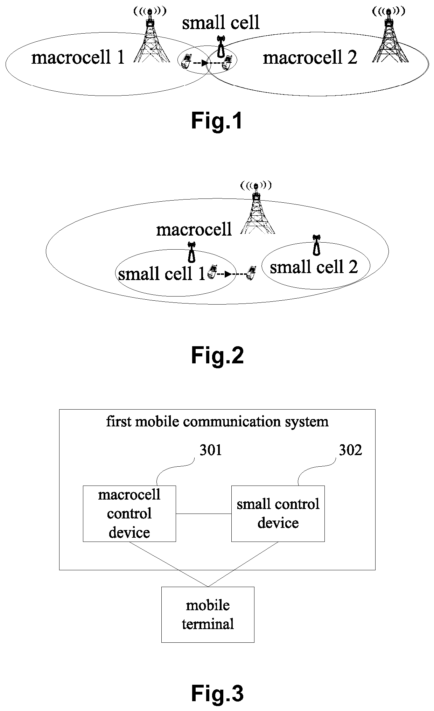

However, when a radio link failure occurs between the mobile terminal in the double connection mode and a small cell or between the mobile terminal in the double connection mode and a macrocell, there is not a communication control solution in the related art to solve the issue hereinabove to guarantee an effective communication of the mobile terminal. As shown in Fig.1, the mobile terminal in the double connection mode is connected to both a macrocell 1 and a small cell. When the mobile terminal moves from a macrocell 1 to a macrocell 2, the mobile terminal keeps the connection with the small cell, while a radio link failure occurs between the macrocell 1 and the mobile terminal. As shown in Fig.2, the mobile terminal in the double connection mode is connected to both a macrocell and a small cell 1. When the mobile terminal moves from a small cell 1 to a small cell 2, the mobile terminal keeps the connection with the macrocell, while a radio link failure occurs between the small cell 1 and the mobile terminal. However, there is not a communication control solution in the related art to solve the issue hereinabove.

Reference CN103581942A discussed a method, device and system for handling a Radio Link Failure (RLF). the method including: detecting, by an LeNB, an RLF occurring with the UE; and stopping, by the LeNB, data of related RB's of the RLF from being transmitted and notifying a macro eNB of information about the RLF. Reference "Secondary Radio Link Failure" from Ericsson discussed whether physical layer problem detection of the special SCG and reporting thereof shall be supported by the UE. Reference "On RLF and RLM requirements for the special SCell" discussed the issue of whether the UE shall inform MeNB of physical layer problem on the SCG due to L1 out of sync. Reference US20110019644A1 discussed an apparatus and method for performing wireless communication. More particularly, the present invention relates to an apparatus and method for switching a session of a User Equipment (UE) in a wireless communication system. Reference "Mobility robustness with dual connectivity" from Broadcom Corporation discussed that, when the channel from one eNB is weak (e.g. even A3 is triggered), the other channel be exploited to control the handover or maintain connectivity, and shows simulation result demonstrating that dual connectivity can significantly reduce handover failure and reestablishment rates in small cell deployments.

### SUMMARY

The present disclosure provides a mobile terminal communication control method performed by the macro cell, a control device connected to a mobile terminal and a mobile communication system, so as to provide a communication solution in a double connection mode in the case that a radio link failure occurs between a mobile terminal and a macrocell or between a mobile terminal and a small cell, thereby guaranteeing the communication quality of the mobile terminal.

The invention is carried out according to the appended independent claims.

The macrocell controls the mobile terminal to reaccess the small cell, in the case that the small cell is a special small cell of the mobile terminal.

According to the solution hereinabove, it may be guaranteed that the macrocell may acquire information of a new small cell if the special cell of the mobile terminal changes.

According to the solution hereinabove, it may be guaranteed that the macrocell may acquire information of a new special small cell if a radio link failure occurs between the mobile terminal and a small cell.

According to the solution hereinabove, the macrocell reconfigures a radio resource control connection of the mobile terminal, thereby guaranteeing that the mobile terminal communicates using the new radio resource subsequent to the radio link failure.

According to the solution hereinabove, the macro cell acquires data of the mobile terminal cached at the small cell, thereby guaranteeing a continuity of the mobile terminal communication.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

The solution gives several cases of the radio link failure.

In a second aspect, a mobile terminal communication control method is provided in some embodiments of the present disclosure, including:
determining, by a mobile terminal, that a radio link failure occurs between the mobile terminal and a small cell connected to the mobile terminal, and notifying a macrocell connected to the mobile terminal; and
reaccessing the small cell by the mobile terminal under the control of the macrocell, or accessing randomly a small cell by the mobile terminal under the control of the macrocell, or interrupting a connection between the mobile terminal and the small cell by the mobile terminal.

The above is a communication control solution for a radio link failure occurring between a mobile terminal in double connection mode and a small cell.

The step of accessing randomly a small cell by the mobile terminal under the control of the macrocell includes:
receiving by the mobile terminal, from the macrocell, a notification message notifying the mobile terminal to perform a radio measurement; and
performing by the mobile terminal the radio measurement in response to the notification message, and reporting a result of the radio measurement to the macrocell, so as to make the macrocell control the mobile terminal to access a small cell based on the result.

According to the solution hereinabove, the mobile terminal is controlled to access the small cell based on the result of the radio measurement reported by the mobile terminal, thereby guaranteeing communication quality of the mobile terminal in the small cell.

According to the solution hereinabove, the macrocell notifies the mobile terminal to perform a radio measurement, in the case that the macrocell fails to control the mobile terminal to reaccess the small cell where the radio link failure occurred, so as to make the mobile terminal access another small cell, such that it is guaranteed that the mobile terminals tries to access firstly the small cell where the radio link failure occurred.

The macrocell controls the mobile terminal to reaccess the small cell, in the case that the small cell is a special small cell of the mobile terminal.

According to the solution hereinabove, the macrocell reconfigures a radio resource control connection of the mobile terminal, thereby guaranteeing that the mobile terminal communicates using the new radio resource subsequent to the radio link failure.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

The solution gives several cases of the radio link failure.

In a third aspect, a mobile terminal communication control method is provided in some embodiments of the present disclosure, including:
determining, by a mobile terminal, that a radio link failure occurs between the mobile terminal and a macrocell connected to the mobile terminal; and
in the case that quality of a radio signal of a small cell connected to the mobile terminal received by the mobile terminal is greater than a predetermined radio signal quality threshold,
reporting by the mobile terminal to the small cell a notification message notifying that the radio link failure occurs between the mobile terminal and the macrocell connected to the mobile terminal, so as to make the small cell request a mobile management entity in a core network for a patch switch to switch a path from the mobile management entity to the macrocell to a path from the mobile management entity to the small cell; or
reporting by the mobile terminal to the small cell a notification message notifying the radio link failure occurs between the mobile terminal and the macrocell connected to the mobile terminal, so as to make the small cell request the core network for switching a user plane of the mobile terminal at the macrocell to the small cell and then make the macrocell transmit control plane data of the mobile terminal at the macrocell via the small cell.

The above is a communication control solution for a radio link failure occurring between a mobile terminal in double connection mode and a macrocell.

Optionally, subsequent to determining, by a mobile terminal, that a radio link failure occurs between the mobile terminal and a macrocell connected to the mobile terminal, the method further comprises:

in the case that the quality of the radio signal of the small cell connected to the mobile terminal received by the mobile terminal is greater than the predetermined radio signal quality threshold, reporting by the mobile terminal to the small cell the notification message notifying that the radio link failure occurs between the mobile terminal and the macrocell connected to the mobile terminal, so as to make the small cell notify the macrocell that the radio link failure occurs between the mobile terminal and the macrocell connected to the mobile terminal.

According to the solution hereinabove, the macrocell is notified that a radio link failure occurs between a mobile terminal and a small cell.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

In a fourth aspect, a mobile terminal communication control method is provided in some embodiments of the present disclosure, including:
receiving, by a small cell, a notification message which is sent by a mobile terminal connected to the small cell and notifies that a radio link failure occurs between the mobile terminal and a macrocell connected to the mobile terminal; and
requesting, by the small cell, a mobile management entity in a core network for a patch switch, so as to switch a path from the mobile management entity to the macrocell to a path from the mobile management entity to the small cell; or
requesting, by the small cell, the core network for switching a user plane of the mobile terminal at the macrocell to the small cell and then making the macrocell transmit control plane data of the mobile terminal at the macrocell via the small cell;
wherein the notification message is sent to the small cell by the mobile terminal subsequent to the mobile terminal determining that quality of radio signal of the small cell received by the mobile terminal is greater than a predetermined radio signal quality threshold.

The above is a communication control solution for a radio link failure occurring between a mobile terminal in double connection mode and a macrocell.

Optionally, subsequent to receiving, by a small cell, a notification message which is sent by a mobile terminal connected to the small cell and notifying that a radio link failure occurs between the mobile terminal and a macrocell connected to the mobile terminal, the method further includes:
notifying the macrocell by the small cell that a radio link failure occurs between the mobile terminal and the macrocell.

According to the solution hereinabove, the small cell notifies the macrocell that a radio link failure occurs between the mobile terminal and the macrocell.

Optionally, subsequent to requesting, by the small cell, a mobile management entity in a core network for a patch switch, the method further includes: notifying the mobile management entity by the small cell that the radio link failure occurs between the mobile terminal and the macrocell connected to the mobile terminal.

According to the solution hereinabove, the MME is notified that the radio link failure occurs between the mobile terminal and the macrocell.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

The solution gives several cases of the radio link failure.

In a fifth aspect, a macrocell control device is provided in some embodiments of the present disclosure, including: a first processing module, configured to determine that a radio link failure occurs between the mobile terminal and a small cell connected to the mobile terminal; and
a second processing module, configured to control the mobile terminal to reaccess the small cell, control the mobile terminal to access randomly a small cell, or cancel the small cell, subsequent to the first processing module determining that the radio link failure occurs between the mobile terminal and the small cell connected to the mobile terminal.

The above is a communication control solution for a radio link failure occurring between a mobile terminal in double connection mode and a small cell.

Optionally, when the second processing module controls the mobile terminal to access randomly a small cell, the second processing module is further configured to: notify the mobile terminal to perform a radio measurement; and control the mobile terminal to access a small cell, based on a result of the radio measurement reported by the mobile terminal.

According to the solution hereinabove, the mobile terminal is controlled to access the small cell based on the result of the radio measurement reported by the mobile terminal, thereby guaranteeing communication quality of the mobile terminal in the small cell.

Optionally, the step of notifying, by the macrocell, the mobile terminal to perform a radio measurement includes: notifying, by the macrocell, the mobile terminal to perform a radio measurement, in the case that the macrocell fails to control the mobile terminal to reaccess the small cell where the radio link failure occurred.

According to the solution hereinabove, the second processing module notifies the mobile terminal to perform a radio measurement, in the case that the second processing module fails to control the mobile terminal to reaccess the small cell where the radio link failure occurred, so as to make the mobile terminal access other small cell, such that it is guaranteed that the mobile terminals tries to access firstly the small cell where the radio link failure occurred.

Optionally, when the second processing module controls the mobile terminal to reaccess the small cell, the second processing module is further configured to: control the mobile terminal to reaccess the small cell, in the case that the small cell is a special small cell of the mobile terminal;

The special small cell is the small cell among the small cells connected to the mobile terminal, which controls connections between the mobile terminal and the small cells.

The macrocell controls the mobile terminal to reaccess the small cell, in the case that the small cell is a special small cell of the mobile terminal.

Optionally, subsequent to controlling, by the macrocell, the mobile terminal to access randomly a small cell, the method further includes: acquiring by the macrocell, in the case that small cell is a special small cell of the mobile terminal, information of a special small cell accessed by the mobile terminal subsequent to the mobile terminal accessing randomly a small cell, where the special small cell is the small cell among the small cells connected to the mobile terminal, which controls connections between the mobile terminal and the small cells.

According to the solution hereinabove, it may be guaranteed that the macrocell may acquire information of a new small cell if the special cell of the mobile terminal changes.

Optionally, subsequent to cancelling the small cell, the second processing module is further configured to: acquire, in the case that small cell is a special small cell of the mobile terminal and the mobile terminal further accesses other small cells subsequent to the radio link failure, information of a special small cell accessed by the mobile terminal subsequent to the radio link failure.

The special small cell is the small cell among the small cells connected to the mobile terminal, which controls connections between the mobile terminal and the small cells.

According to the solution hereinabove, it may be guaranteed that the macrocell may acquire information of a new special small cell if a radio link failure occurs between the mobile terminal and a small cell.

Optionally, subsequent to determining that a radio link failure occurs between the mobile terminal and a small cell connected to the mobile terminal, the second processing module is further configured to: reconfigure a radio resource control connection of the mobile terminal; acquire data of the mobile terminal cached at the small cell when the radio link failure occurs.

According to the solution hereinabove, the macrocell reconfigures a radio resource control connection of the mobile terminal, thereby guaranteeing that the mobile terminal communicates using the new radio resource subsequent to the radio link failure.

According to the solution hereinabove, the macro cell acquires data of the mobile terminal cached at the small cell, thereby guaranteeing a continuity of the mobile terminal communication.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

The solution gives several cases of the radio link failure.

In a sixth aspect, a mobile terminal connected to both a macrocell and a small cell is provided, including:
a first processing module, configured to notify the macrocell that a radio link failure occurs between the mobile terminal and the small cell; and
a second processing module, configured to make the mobile terminal reaccess the small cell under a control of the macrocell, or make the mobile terminal access randomly a small cell under the control of the macrocell, or interrupt a connection between the mobile terminal and the small cell, subsequent to the first processing module notifying the macrocell that the radio link failure occurs between the mobile terminal and the small cell.

The above is a communication control solution for a radio link failure occurring between a mobile terminal in double connection mode and a small cell.

Optionally, when making the mobile terminal access randomly a small cell under the control of the macrocell, the second processing module is further configured to receive from the macrocell, a notification message notifying the mobile terminal to perform a radio measurement; and perform the radio measurement in response to the notification message, and report a result of the radio measurement to the macrocell, so as to make the macrocell control the mobile terminal to access a small cell based on the result.

According to the solution hereinabove, the mobile terminal is controlled to access the small cell based on the result of the radio measurement reported by the mobile terminal, thereby guaranteeing communication quality of the mobile terminal in the small cell.

Optionally, the step of notifying, by the macrocell, the mobile terminal to perform a radio measurement includes: notifying, by the macrocell, the mobile terminal to perform a radio measurement, in the case that the macrocell fails to control the mobile terminal to reaccess the small cell where the radio link failure occurred.

According to the solution hereinabove, the macrocell notifies the mobile terminal to perform a radio measurement, in the case that the macrocell fails to control the mobile terminal to reaccess the small cell where the radio link failure occurred, so as to make the mobile terminal access another small cell, such that it is guaranteed that the mobile terminal tries to access firstly the small cell where the radio link failure occurred.

Optionally, the step of controlling, by the macrocell, the mobile terminal to reaccess the small cell includes: controlling, by the macrocell, the mobile terminal to reaccess the small cell, in the case that the small cell is a special small cell of the mobile terminal, where the special small cell is the small cell among the small cells connected to the mobile terminal, which controls connections between the mobile terminal and the small cells.

The macrocell controls the mobile terminal to reaccess the small cell, in the case that the small cell is a special small cell of the mobile terminal.

Optionally, subsequent to the mobile terminal notifying the macrocell that a radio link failure occurs between the mobile terminal and a small cell, the method further includes: reconfiguring the RRC connection by the mobile terminal based on the RRC reconfiguration message received from the macrocell.

According to the solution hereinabove, the macrocell reconfigures a radio resource control connection of the mobile terminal, thereby guaranteeing that the mobile terminal communicates using the new radio resource subsequent to the radio link failure.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

The solution gives several cases of the radio link failure.

In a seventh aspect, a mobile communication system is provided, including a macrocell control device configured to control a macrocell connected to a mobile terminal and a small cell control device configured to control a small cell connected to the mobile terminal.

the macrocell control device is configured to control the mobile terminal to reaccess the small cell, control the mobile terminal to access randomly a small cell, or cancel the small cell, subsequent to receiving a notification message which is sent by the mobile terminal and notifies that the radio link failure occurs between the mobile terminal and the small cell connected to the mobile terminal.

The above is a communication control solution for a radio link failure occurring between a mobile terminal in double connection mode and a small cell.

In an eighth aspect, a mobile terminal connected to both a macrocell and a small cell is provided, including a first processing module, configured to determine that a radio link failure occurs between the mobile terminal and the macrocell connected to the mobile terminal; and
a second processing module, configured to, in the case that quality of a radio signal of a small cell connected to the mobile terminal received by the mobile terminal is greater than a predetermined radio signal quality threshold, report to the small cell a notification message notifying that the radio link failure occurs between the mobile terminal and the macrocell connected to the mobile terminal, so as to make the small cell request a mobile management entity in a core network for a patch switch to switch a path from the mobile management entity to the macrocell to a path from the mobile management entity to the small cell; or report to the small cell a notification message notifying the radio link failure occurs between the mobile terminal and the macrocell connected to the mobile terminal, so as to make the small cell request the core network for switching a user plane of the mobile terminal at the macrocell to the small cell and then make the macrocell transmit control plane data of the mobile terminal at the macrocell via the small cell.

The above is a communication control solution for a radio link failure occurring between a mobile terminal in double connection mode and a macrocell.

Optionally, subsequent to the first processing module determining that a radio link failure occurs between the mobile terminal and the macrocell connected to the mobile terminal, the second processing module is further configured to: in the case that the quality of the radio signal of the small cell connected to the mobile terminal received by the mobile terminal is greater than the predetermined radio signal quality threshold, report to the small cell the notification message notifying that the radio link failure occurs between the mobile terminal and the macrocell connected to the mobile terminal, so as to make the small cell notify the macrocell that the radio link failure occurs between the mobile terminal and the macrocell connected to the mobile terminal.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

In a ninth aspect, a small cell is provided, including:
a first processing module, configured to receive a notification message which is sent by a mobile terminal connected to the small cell and notifies that a radio link failure occurs between the mobile terminal and a macrocell connected to the mobile terminal; and
a second processing module, configured to request a mobile management entity in a core network for a patch switch, so as to switch a path from the mobile management entity to the macrocell to a path from the mobile management entity to the small cell; or request the core network for switching a user plane of the mobile terminal at the macrocell to the small cell and then making the macrocell transmit control plane data of the mobile terminal at the macrocell via the small cell;

The notification message is sent to the small cell by the mobile terminal subsequent to the mobile terminal determining that quality of radio signal of the small cell received by the mobile terminal is greater than a predetermined radio signal quality threshold.

The above is a communication control solution for a radio link failure occurring between a mobile terminal in double connection mode and a macrocell.

Optionally, the second processing module is further configured to notify the macrocell that the radio link failure occurs between the mobile terminal and the main carrier of the macrocell subsequent to receiving a notification message notifying that the radio link failure occurs between the mobile terminal and the main carrier of the macrocell sent by the mobile terminal.

According to the solution hereinabove, the small cell notifies the macrocell that a radio link failure occurs between the mobile terminal and the macrocell.

Optionally, the second processing module is further configured to notify the MME that the radio link failure occurs between the mobile terminal and the macrocell connected to the mobile terminal subsequent to requesting the MME in the core network for the patch switch.

According to the solution hereinabove, the MME is notified that the radio link failure occurs between the mobile terminal and the macrocell

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

The solution gives several cases of the radio link failure.

In a tenth aspect, a mobile communication system is provided, including a macrocell control device connected to a mobile terminal and a small cell control device connected to the mobile terminal.

The small cell control device is configured to, subsequent to receiving a notification message which is sent by the mobile terminal and notifies that a radio link failure occurs between the mobile terminal and a macrocell connected to the mobile terminal, request a mobile management entity in a core network for a patch switch, so as to switch a path from the mobile management entity to the macrocell to a path from the mobile management entity to the small cell; or request the core network for switching a user plane of the mobile terminal at the macrocell to the small cell and then making the macrocell to transmit control plane data of the mobile terminal at the macrocell via the small cell.

The notification message is sent to the small cell by the mobile terminal subsequent to the mobile terminal determines that a quality of radio signal of the small cell received by the mobile terminal is greater than a predetermined radio signal quality threshold.

The above is a communication control solution for a radio link failure occurring between a mobile terminal in double connection mode and a macrocell.

### BRIEF DESCRIPTION OF THE DRAWINGS

Fig.1 is a schematic view showing that a radio link failure occurs between a macrocell and a mobile terminal in a double connection mode;
Fig.2 is a schematic view showing that a radio link failure occurs between a microcell and a mobile terminal in a double connection mode;
Fig.3 is a schematic view of a first mobile communication system in some embodiments of the present disclosure;
Fig.4 is a flow chart of a first mobile communication controlling method in some embodiments of the present disclosure;
Fig.5 is a flow chart of a second mobile communication controlling method in some embodiments of the present disclosure;
Fig.6 is a flow chart of a third mobile communication controlling method in some embodiments of the present disclosure;
Fig.7 is a schematic view of a macrocell control device in some embodiments of the present disclosure;
Fig.8 is a schematic view of a first mobile terminal in some embodiments of the present disclosure;
Fig.9 is a schematic view of a second mobile communication system in some embodiments of the present disclosure;
Fig.10 is a flow chart of a fourth mobile communication controlling method in some embodiments of the present disclosure;
Fig.11 is a flow chart of a fifth mobile communication controlling method in some embodiments of the present disclosure;
Fig.12 is a flow chart of a sixth mobile communication controlling method in some embodiments of the present disclosure;
Fig.13 is a schematic view of a second mobile terminal in some embodiments of the present disclosure;
Fig.14 is a schematic view of a microcell controlling device in some embodiments of the present disclosure.

### DETAILED DESCRIPTION

The present disclosure provides a mobile terminal communication controlling method, device and system, so as to provide a communication controlling solution in the case that a radio link failure occurs between a mobile terminal and a small cell or between a mobile terminal and a macrocell.

According to a mobile terminal communication control method, a macrocell connected to a mobile terminal determines that a radio link failure occurs between the mobile terminal and a small cell connected to the mobile terminal; the macrocell controls the mobile terminal to reaccess the small cell, or control the mobile terminal to access randomly a small cell, or cancel the small cell by the macrocell. The method provides a communication control solution in a double connection mode in the case that a radio link failure occurs between a mobile terminal and a small cell.

According to another mobile terminal communication control method, the method includes: determining, by a mobile terminal, that a radio link failure occurs between the mobile terminal and a macrocell connected to the mobile terminal; in the case that a quality of a radio signal of a small cell connected to the mobile terminal received by the mobile terminal is greater than a predetermined radio signal quality threshold, the mobile terminal reporting to the small cell a notification message notifying that the radio link failure occurs between the mobile terminal and the macrocell connected to the mobile terminal, so as to make the small cell request a mobile management entity in a core network for a patch switch to switch a path from the mobile management entity to the macrocell to a path from the mobile management entity to the small cell; or reporting by the mobile terminal to the small cell a notification message notifying the radio link failure occurs between the mobile terminal and the macrocell connected to the mobile terminal, so as to make the small cell request the core network for switching a user plane of the mobile terminal at the macrocell to the small cell and then make the macrocell transmit control plane data of the mobile terminal at the macrocell via the small cell. The method provides a communication control solution in a double connection mode in the case that a radio link failure occurs between a mobile terminal and a macrocell.

Next, the communication control solution in a double connection mode in the case that a radio link failure occurs between a mobile terminal and a macrocell or between a mobile terminal and a small cell will be described in details herein in conjunction with drawings. In the description of solution herein, a mobile terminal is connected to both a small cell and a macrocell (i.e., the mobile terminal is in the double connection mode).

Firstly, the communication control solution in a double connection mode in the case that a radio link failure occurs between a mobile terminal and a small cell may be described.

Fig.3 is a schematic view of a first mobile communication system in some embodiments of the present disclosure. As shown in Fig.3, the system includes: a macrocell control device 301 configured to control a macrocell connected to a mobile terminal and a small control device 302 configured to control a small cell connected to a mobile terminal.

The macrocell control device 301 is configured to control the mobile terminal to reaccess the small cell, control the mobile terminal to access randomly a small cell, or cancel the small cell, subsequent to receiving a notification message which is sent by the mobile terminal and notifies that the radio link failure occurs between the mobile terminal and the small cell connected to the mobile terminal.

Although the mobile terminal and the macrocell control device 301 are connected to each other via a full line in Fig.3, it does not mean that the connection therebetween is a wired connection. Similarly, although the mobile terminal and the small cell control device 302 are connected to each other via a full line in Fig.3, it does not mean that the connection therebetween is a wired connection. In an actual communication system, a connection between a mobile terminal and a cell is generally a wireless connection.

Next, a cooperation of a mobile terminal side and a macrocell side will be described first, and then the communication control solution in the case that a radio link failure occurs between a mobile terminal and a small cell will be described in the mobile terminal side and the macrocell side respectively. However, it does not mean that the mobile terminal needs to cooperate with the macrocell.

Next, a cooperation of a mobile terminal side and a macrocell side will be described.

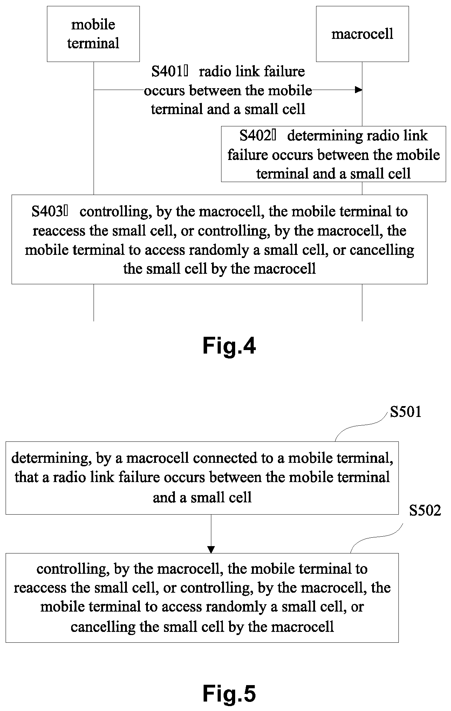

Fig.4 is a flow chart of a first mobile communication controlling method in some embodiments of the present disclosure. As shown in Fig.4, the method includes the following steps:
Step 401: notifying, by a mobile terminal, a macrocell connected to the mobile terminal that a radio link failure occurs between the mobile terminal and a small cell connected to mobile terminal;
Step 402: receiving by the macrocell the notification message in Step 401 and determining that the radio link failure occurs between the mobile terminal and the small cell;

That is, before the macrocell connected to the mobile terminal determine that the radio link failure occurs between the mobile terminal and the small cell connected to the mobile terminal, the macrocell receives the notification message notifying the occurrence of the radio link failure. The notification message is configured to notify the occurrence of the radio link failure, so it is not doubt that a message type of the notification is a SCG radio link failure.

Step 403: controlling, by the macrocell, the mobile terminal to reaccess the small cell, or controlling, by the macrocell, the mobile terminal to access randomly a small cell, or cancelling the small cell by the macrocell.

Prior to Step 404, the mobile terminal receives and sends data the radio resource of both the macrocell and the small.

In Step 401, when the mobile terminal detects the radio link failure in a radio link of the small cell, the mobile terminal notifies the macrocell that the radio link failure occurs between the mobile terminal and the small cell by sending a dedicated radio resource control message via the resource of the macrocell.

The RRC message may multiplex a RRC connection reestablishment request in the related art, or a new defined RRC message is also available, as long as notifying the macrocell that the radio link failure occurs between the mobile terminal and the small cell. A cell identification of the small cell where the radio link failure occurred and/or the radio link failure reason may also be carried in the message.

The radio link failure reason may be any one of the following:
reason I: the mobile terminal fails to access the small cell randomly;
reason II: a retransmission time of the mobile terminal reaches a retransmission time threshold;
reason III: timer T310 or T313 expires.

After receiving the notification hereinabove, the macrocell may perform any one of the following solutions:
solution I: controlling the mobile terminal to reaccess the small cell;
solution II: controlling the mobile terminal to access randomly a small cell;
solution III: cancelling the small cell.

Optionally, the macrocell may adopt solution I to solution III based on the three reasons hereinabove. For example, if the mobile terminal fails to access the small cell randomly, the macrocell may adopt solution III to cancel the small cell; if the timer T310 or T313 expires, the macrocell may adopt solution I to control the mobile terminal to reaccess the small cell. The adoption of the solution is based on a product implementation, which is not limited herein.

The three solutions hereinabove will be described in details in the following.

solution I: controlling the mobile terminal to reaccess the small cell.

Optionally, the macrocell controls the mobile terminal to reaccess the small cell, in the case that the small cell is a special small cell of the mobile terminal.

The special small cell is the small cell among the small cells connected to the mobile terminal, which controls connections between the mobile terminal and the small cells. Relative to the other cells of a SeNB, the special small cell corresponds to the mobile terminal (i.e., the special small cells corresponding to different mobile terminal in a coverage area of the SeNB may be different). The special small cell receives a signal transmitted via a physical uplink control channel of the mobile terminal corresponding to the special small cell, while the other small cell of the SeNB does not receive.

solution II: controlling the mobile terminal to access randomly a small cell;
Optionally, the macrocell may control the mobile terminal to access randomly a small cell by the following ways:
notifying, by the macrocell, the mobile terminal to perform a radio measurement;
controlling, by the macrocell, the mobile terminal to access a small cell, based on a result of the radio measurement reported by the mobile terminal.

Optionally, the macrocell adopts solution I to control he mobile terminal to access randomly a small cell, and then adopt solution II to notify the mobile terminal to perform a radio measurement and control the mobile terminal to access a small cell, based on a result of the radio measurement reported by the mobile terminal.

In solution II, the macrocell controls the mobile terminal to access a small cell, based on a result of the radio measurement reported by the mobile terminal. Therefore, the mobile terminal may access the small cell where the radio link failure occurred or other small cells, which depends on the result of the radio measurement.

Optionally, if solution II is adopted, subsequent to controlling the mobile terminal to access randomly a small cell, the macrocell may further performs the following steps:
acquiring by the macrocell, in the case that small cell is a special small cell of the mobile terminal, information of a special small cell accessed by the mobile terminal subsequent to the mobile terminal accessing randomly a small cell.

solution III: cancelling the small cell.

Optionally, in solution III, the steps of cancelling the small cell where the radio link failure occurred includes:
sending by the macrocell a SCG addition/modification indication message to instruct to cancel the small cell; the small cell, subsequent to receiving the message, sending a SCG modification request message to request cancelling the small cell, where the macrocell notifies the mobile terminal to cancel the small cell via a RRC connection reconfiguration process and reconfigure a RRC connection of the mobile terminal; subsequent to receiving a RRC connection reconfiguration complete message sent by the mobile terminal, sending a SCG modification response to the small cell to notify the cancelling of the small cell.

Optionally, if solution II is adopted, subsequent to cancelling the small cell where the radio link failure occurred, the macrocell may further perform the following steps:
acquiring by the macrocell, in the case that small cell is a special small cell of the mobile terminal and the mobile terminal further accesses other small cells subsequent to the radio link failure, information of a special small cell accessed by the mobile terminal subsequent to the radio link failure. That is, in solution III, the small cell where the radio link failure occurred is a special small cell of the mobile terminal, and then solution III may be adopted, i.e., the macrocell notifies the mobile terminal to cancel the small cell via a RRC connection reconfiguration process.

Optionally, in Step 402, subsequent to determining that the radio link failure occurs between the mobile terminal and the small cell, the macrocell may perform the following steps:
reconfiguring a radio resource control connection of the mobile terminal by the macrocell;
acquiring, by the macro cell, data of the mobile terminal cached at the small cell.

Next, the communication control solution in a double connection mode in the case that a radio link failure occurs between a mobile terminal and a small cell may be described from the macrocell side.

As shown in Fig.5, the method includes:
Step 501: determining, by a macrocell connected to a mobile terminal, that a radio link failure occurs between the mobile terminal and a small cell connected to the mobile terminal;
Step 502: controlling, by the macrocell, the mobile terminal to reaccess the small cell, or controlling, by the macrocell, the mobile terminal to access randomly a small cell, or cancelling the small cell by the macrocell.

Optionally, in Step 502, the step of cancelling the small cell by the macrocell includes:
notifying, by the macrocell, the mobile terminal to perform a radio measurement;
controlling, by the macrocell, the mobile terminal to access a small cell, based on a result of the radio measurement reported by the mobile terminal.

Optionally, the step of notifying, by the macrocell, the mobile terminal to perform a radio measurement includes:
notifying, by the macrocell, the mobile terminal to perform a radio measurement, in the case that the macrocell fails to control the mobile terminal to reaccess the small cell where the radio link failure occurred.

Optionally, in Step 502, the step of controlling, by the macrocell, the mobile terminal to reaccess the small cell includes:
controlling, by the macrocell, the mobile terminal to reaccess the small cell, in the case that the small cell is a special small cell of the mobile terminal.

The special small cell is the small cell among the small cells connected to the mobile terminal, which controls connections between the mobile terminal and the small cells.

Optionally, in Step 502, subsequent to controlling, by the macrocell, the mobile terminal to reaccess the small cell, the method further includes:
acquiring by the macrocell, in the case that small cell is a special small cell of the mobile terminal, information of a special small cell accessed by the mobile terminal subsequent to the mobile terminal accessing randomly a small cell.

The special small cell is the small cell among the small cells connected to the mobile terminal, which controls connections between the mobile terminal and the small cells.

Optionally, in Step 502, subsequent to the macrocell cancels the small cell where the radio link failure occurred, the method further includes:
acquiring by the macrocell, in the case that small cell is a special small cell of the mobile terminal and the mobile terminal further accesses other small cells subsequent to the radio link failure, information of a special small cell accessed by the mobile terminal subsequent to the radio link failure.

The special small cell is the small cell among the small cells connected to the mobile terminal, which controls connections between the mobile terminal and the small cells.

Optionally, subsequent to determining that a radio link failure occurs between the mobile terminal and a small cell connected to the mobile terminal, the method may include at least one of the following steps:
reconfiguring a radio resource control connection of the mobile terminal by the macrocell;
acquiring, by the macro cell, data of the mobile terminal cached at the small cell.

The radio link failure reason may be any one of the following:
reason I: the mobile terminal fails to access the small cell randomly;
reason II: a retransmission time of the mobile terminal reaches a retransmission time threshold;
reason III: timer T310 or T313 expires.

Next, the communication control solution in a double connection mode in the case that a radio link failure occurs between a mobile terminal and a small cell may be described from the mobile terminal side.

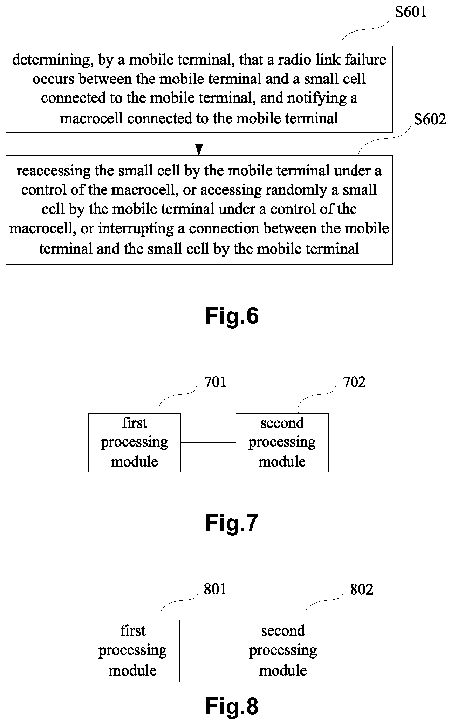

As shown in Fig.6, the method includes:
Step 601: determining, by a mobile terminal, that a radio link failure occurs between the mobile terminal and a small cell connected to the mobile terminal, and notifying a macrocell connected to the mobile terminal;
Step 602: reaccessing the small cell by the mobile terminal under a control of the macrocell, or accessing randomly a small cell by the mobile terminal under a control of the macrocell, or interrupting a connection between the mobile terminal and the small cell by the mobile terminal.

Optionally, in Step 602, the step of accessing randomly a small cell by the mobile terminal under a control of the macrocell includes:
receiving by the mobile terminal, from the macrocell, a notification message notifying the mobile terminal to perform a radio measurement;
performing by the mobile terminal the radio measurement in response to the notification message, reporting a result of the radio measurement to the macrocell, so as to make the macrocell control the mobile terminal to access a small cell based on the result.

Optionally, in Step 602, the step of receiving by the mobile terminal, from the macrocell, a notification message notifying the mobile terminal to perform a radio measurement further includes: receiving by the mobile terminal notification message notifying the mobile terminal to perform a radio measurement subsequent to the mobile terminal failing to reaccess the small cell under a control of the macrocell.

Optionally, in Step 602, the step of reaccessing the small cell by the mobile terminal under a control of the macrocell includes:
reaccessing the small cell by the mobile terminal under a control of the macrocell, in the case that the small cell is a special small cell of the mobile terminal.

The special small cell is the small cell among the small cells connected to the mobile terminal, which controls connections between the mobile terminal and the small cells.

Optionally, in Step 601, subsequent to the mobile terminal notifying the macrocell that a radio link failure occurs between the mobile terminal and a small cell, the method further includes:
reconfiguring the RRC connection by the mobile terminal based on the RRC reconfiguration message received from the macrocell. That is, in a solution where the mobile terminal interrupt the connection with the small cell where the radio link failure occurred, the mobile terminal may receive a RRC connection reconfiguration process for notifying the mobile terminal to cancel the small cell.

Furthermore, subsequent to the mobile terminal receiving the RRC connection reconfiguration, the following steps may be performed in any sequence.

cancelling configuration information of the small cell configured previously;
stopping the timing of the timer, where the timer may be T310, T313 or T307.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

Based on the principle of the solution hereinabove, a macrocell control device and a mobile terminal are further provided by the present disclosure, the principle of which is similar to the principle of the solution hereinabove, so the detailed description thereof may be omitted.

Fig.7 is a schematic view of a macrocell control device in some embodiments of the present disclosure. The macrocell controlled by the device is connected to the mobile terminal. As shown in Fig.7, the device includes:
a first processing module 701, configured to determine that a radio link failure occurs between the mobile terminal and a small cell connected to the mobile terminal;
a second processing module 702, configured to control the mobile terminal to reaccess the small cell, control the mobile terminal to access randomly a small cell, or cancel the small cell, subsequent to the first processing module determining that the radio link failure occurs between the mobile terminal and the small cell connected to the mobile terminal.

Furthermore, before the macrocell connected to the mobile terminal determine that the radio link failure occurs between the mobile terminal and the small cell connected to the mobile terminal, the macrocell receives the notification message notifying the occurrence of the radio link failure. The notification message is configured to notify the occurrence of the radio link failure, so it is not doubt that a message type of the notification is a SCG radio link failure. In addition, it is not doubt that the first processing module 701 or other module may be configured to receive a message notifying that a radio link failure occurs between the mobile terminal and the small cell.

Optionally, the macrocell control device may be a main base station connected to the mobile terminal.

Optionally, when the second processing module controls the mobile terminal to access randomly a small cell, the second processing module 702 is further configured to
notify the mobile terminal to perform a radio measurement;
control the mobile terminal to access a small cell, based on a result of the radio measurement reported by the mobile terminal.

Optionally, when the second processing module 702 notifies the mobile terminal to perform the wireless measurement, the second processing module 702 is further configured to
notify the mobile terminal to perform a radio measurement, in the case that the macrocell fails to control the mobile terminal to reaccess the small cell where the radio link failure occurred.

Optionally, the second processing module 702 is further configured to:
control the mobile terminal to reaccess the small cell, in the case that the small cell is a special small cell of the mobile terminal.

The special small cell is the small cell among the small cells connected to the mobile terminal, which controls connections between the mobile terminal and the small cells.

Optionally, the second processing module 702 is further configured to:
acquire, in the case that small cell is a special small cell of the mobile terminal, information of a special small cell accessed by the mobile terminal subsequent to the mobile terminal accessing randomly a small cell.

The special small cell is the small cell among the small cells connected to the mobile terminal, which controls connections between the mobile terminal and the small cells.

Optionally, the second processing module 702 is further configured to:
acquire, in the case that small cell is a special small cell of the mobile terminal and the mobile terminal further accesses other small cells subsequent to the radio link failure, information of a special small cell accessed by the mobile terminal subsequent to the radio link failure.

The special small cell is the small cell among the small cells connected to the mobile terminal, which controls connections between the mobile terminal and the small cells.

Optionally, the second processing module 702 is further configured to:
reconfigure a radio resource control connection of the mobile terminal by the macrocell;
acquire data of the mobile terminal cached at the small cell.

Furthermore, it can be determined from the cooperation of the mobile terminal and the macrocell, in solution of cancelling the small cell where the radio link failure occurred, the macrocell notifies the mobile terminal to cancel the small cell via a RRC connection reconfiguration process, and it is no doubt that the second processing module 702 may be configured to notify the mobile terminal to cancel the small cell via the RRC connection reconfiguration process.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

Fig.8 is a schematic view of a first mobile terminal in some embodiments of the present disclosure. As shown in Fig.8, the mobile terminal includes:
a first processing module 801, configured to notify the macrocell that a radio link failure occurs between the mobile terminal and the small cell;
a second processing module 802, configured to make the mobile terminal reaccess the small cell under a control of the macrocell, or make the mobile terminal access randomly a small under a control of the macrocell, or interrupt a connection between the mobile terminal and the small cell, subsequent to the first processing module notifying the macrocell that the radio link failure occurs between the mobile terminal and the small cell.

Furthermore, the second processing module 802 may be configured to receive a RRC connection reconfiguration process for notifying the mobile terminal to cancel the small cell.

Optionally, the second processing module 802 is further configured to
receive from the macrocell, a notification message notifying the mobile terminal to perform a radio measurement;
perform the radio measurement in response to the notification message, report a result of the radio measurement to the macrocell, so as to make the macrocell control the mobile terminal to access a small cell based on the result.

Optionally, the second processing module 802 is further configured to
receive notification message notifying the mobile terminal to perform a radio measurement subsequent to the mobile terminal failing to reaccess the small cell under a control of the macrocell.

Optionally, when making the mobile terminal to reaccess the small cell under a control of the macrocell, the second processing module 802 is further configured to
reaccess the small cell under a control of the macrocell, in the case that the small cell is a special small cell of the mobile terminal.

The special small cell is the small cell among the small cells connected to the mobile terminal, which controls connections between the mobile terminal and the small cells.

That is, the small cell where the radio link failure occurred is a special small cell of the mobile terminal, and the macrocell notifies the mobile terminal to cancel the small cell via a RRC connection reconfiguration process when it is determined that the small cell where the radio link failure occurred is a special small cell of the mobile terminal.

Optionally, subsequent to the first processing module 801 notifiying the macrocell that a radio link failure occurs between the mobile terminal and a small cell, the first processing module 801 is further configured to
reconfigure a RRC connection of the mobile terminal based on the RRC reconfiguration message received from the macrocell.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

The communication control solution in a double connection mode in the case that a radio link failure occurs between a mobile terminal and a small cell is described hereinabove. Next, the communication control solution in a double connection mode in the case that a radio link failure occurs between a mobile terminal and a macrocell will be described.

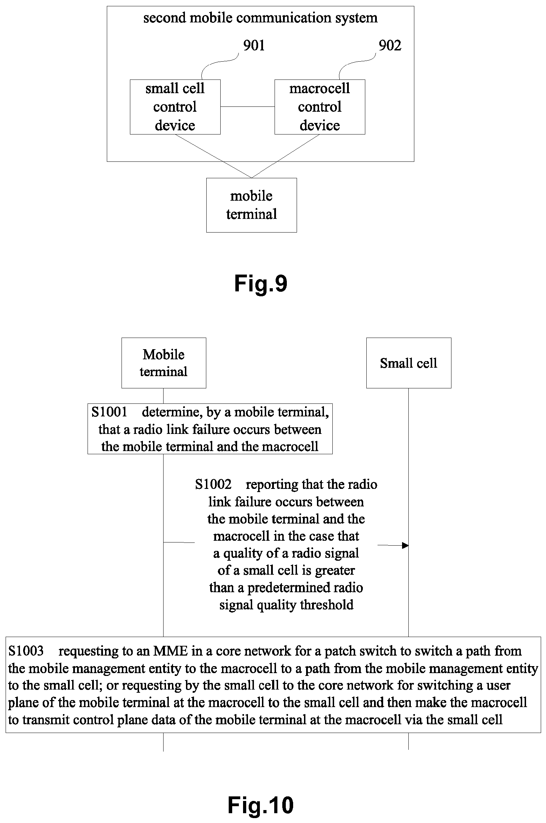

Fig.9 is a schematic view of a second mobile communication system in some embodiments of the present disclosure. As shown in Fig.9, the system includes: a macrocell control device 901 configured to control a macrocell connected to a mobile terminal and a small cell control device 902 configured to control a small cell connected to the mobile terminal.

The small cell control device 902 is configured to, subsequent to receiving a notification message which is sent by the mobile terminal and notifies that a radio link failure occurs between the mobile terminal and a macrocell connected to the mobile terminal, request a mobile management entity in a core network for a patch switch, so as to switch a path from the mobile management entity to the macrocell to a path from the mobile management entity to the small cell; or request the core network for switching a user plane of the mobile terminal at the macrocell to the small cell and then making the macrocell to transmit control plane data of the mobile terminal at the macrocell via the small cell.

Next, a cooperation of a mobile terminal side and a small cell side will be described first, and then the communication control solution in the case that a radio link failure occurs between a mobile terminal and a small cell will be described in the mobile terminal side and the small cell side respectively. However, it does not mean that the mobile terminal needs to cooperate with the small cell.

Next, a cooperation of a mobile terminal side and a small cell side will be described.

Fig.10 is a flow chart of a fourth mobile communication controlling method in some embodiments of the present disclosure. As shown in Fig.5, the method includes:
Step 1001: determine, by a mobile terminal, that a radio link failure occurs between the mobile terminal and the macrocell connected to the mobile terminal
Step 1002: reporting to the small cell a notification message notifying that the radio link failure occurs between the mobile terminal and the macrocell connected to the mobile terminal in the case that a quality of a radio signal of a small cell connected to the mobile terminal received by the mobile terminal is greater than a predetermined radio signal quality threshold;
Step 1003: requesting by the small cell to a mobile management entity in a core network for a patch switch to switch a path from the mobile management entity to the macrocell to a path from the mobile management entity to the small cell; or
requesting by the small cell to the core network for switching a user plane of the mobile terminal at the macrocell to the small cell and then make the macrocell transmit control plane data of the mobile terminal at the macrocell via the small cell.

The predetermined radio signal quality threshold in Step 1002 may be determined based on the actual product implementation.

In Step 1003, the small cell may switch a path from the mobile management entity to the macrocell to a path from the mobile management entity to the small cell based on a path switch request in the related art.

Optionally, subsequent to Step 1001, the method further comprises:
in the case that the quality of the radio signal of the small cell connected to the mobile terminal received by the mobile terminal is greater than the predetermined radio signal quality threshold, reporting to the small cell the notification message notifying that the radio link failure occurs between the mobile terminal and the macrocell connected to the mobile terminal, so as to make the small cell notify the macrocell that the radio link failure occurs between the mobile terminal and the macrocell connected to the mobile terminal.

Optionally, if the mobile terminal uses a main carrier in the macrocell, the mobile terminal reports to the small cell the notification message notifying that the radio link failure occurs between the mobile terminal and the main carrier of the macrocell connected to the mobile terminal, so as to make the small cell notify the macrocell that the radio link failure occurs between the mobile terminal and the main carrier of the macrocell connected to the mobile terminal.

Optionally, in Step 1001, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

Next, the communication control solution in a double connection mode in the case that a radio link failure occurs between a mobile terminal and a macrocell may be described from the mobile terminal side.

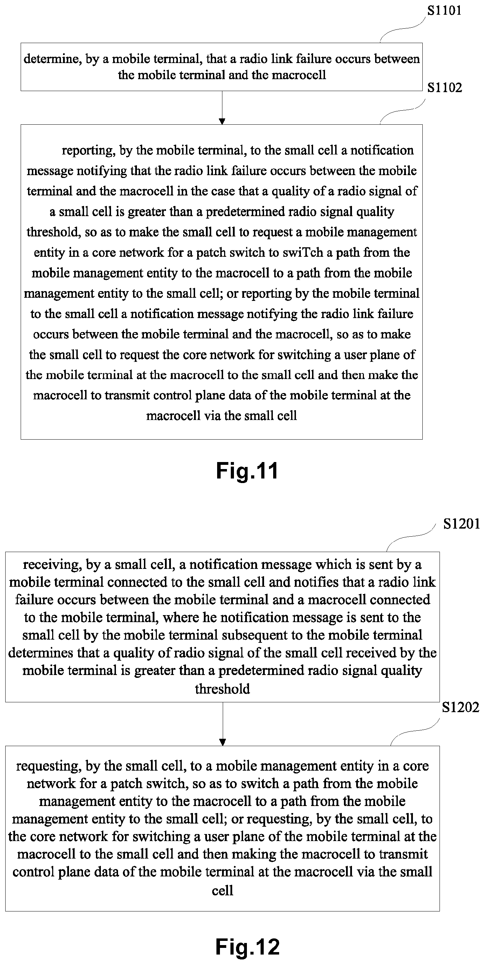

As shown in Fig.11, the method includes:
Step 1101: determine, by a mobile terminal, that a radio link failure occurs between the mobile terminal and the macrocell connected to the mobile terminal
Step 1102: reporting, by the mobile terminal, to the small cell a notification message notifying that the radio link failure occurs between the mobile terminal and the macrocell connected to the mobile terminal in the case that a quality of a radio signal of a small cell connected to the mobile terminal received by the mobile terminal is greater than a predetermined radio signal quality threshold, so as to make the small cell request a mobile management entity in a core network for a patch switch to switch a path from the mobile management entity to the macrocell to a path from the mobile management entity to the small cell; or
reporting by the mobile terminal to the small cell a notification message notifying the radio link failure occurs between the mobile terminal and the macrocell connected to the mobile terminal, so as to make the small cell request the core network for switching a user plane of the mobile terminal at the macrocell to the small cell and then make the macrocell transmit control plane data of the mobile terminal at the macrocell via the small cell.

Optionally, in Step 1101, subsequent to the first processing module determining that a radio link failure occurs between the mobile terminal and the macrocell connected to the mobile terminal, the second processing module is further configured to
in the case that the quality of the radio signal of the small cell connected to the mobile terminal received by the mobile terminal is greater than the predetermined radio signal quality threshold, report to the small cell the notification message notifying that the radio link failure occurs between the mobile terminal and the macrocell connected to the mobile terminal, so as to make the small cell notify the macrocell that the radio link failure occurs between the mobile terminal and the macrocell connected to the mobile terminal.

Optionally, if the mobile terminal uses a main carrier in the macrocell, the mobile terminal reports to the small cell the notification message notifying that the radio link failure occurs between the mobile terminal and the main carrier of the macrocell connected to the mobile terminal, so as to make the small cell notify the macrocell that the radio link failure occurs between the mobile terminal and the main carrier of the macrocell connected to the mobile terminal.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

Next, the communication control solution in a double connection mode in the case that a radio link failure occurs between a mobile terminal and a macrocell may be described from the small cell side.

As shown in Fig.12, the method includes:
Step 1201: receiving, by a small cell, a notification message which is sent by a mobile terminal connected to the small cell and notifies that a radio link failure occurs between the mobile terminal and a macrocell connected to the mobile terminal;
Step 1202: requesting, by the small cell, to a mobile management entity in a core network for a patch switch, so as to switch a path from the mobile management entity to the macrocell to a path from the mobile management entity to the small cell; or requesting, by the small cell, to the core network for switching a user plane of the mobile terminal at the macrocell to the small cell and then making the macrocell to transmit control plane data of the mobile terminal at the macrocell via the small cell.

The notification message is sent to the small cell by the mobile terminal subsequent to the mobile terminal determining that a quality of radio signal of the small cell received by the mobile terminal is greater than a predetermined radio signal quality threshold.

Optionally, subsequent to Step 1201, the method further includes:
notifying by the small cell to the macrocell that a radio link failure occurs between the mobile terminal and the main carrier of the macrocell.

Optionally, Step 1201 further includes:
if the notification message notifying that the radio link failure occurs between the mobile terminal and the main carrier of the macrocell connected to the mobile terminal is received from a base station, notifying the main base station of the macrocell that the radio link failure occurs between the mobile terminal and the main carrier of the macrocell connected to the mobile terminal.

Optionally, subsequent to Step 1202, the method further includes:
notifying, by the small cell, the mobile management entity that the radio link failure occurs between the mobile terminal and the macrocell connected to the mobile terminal.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

Based on the principle of the solution hereinabove, a small cell control device and a mobile terminal are further provided by the present disclosure, the principle of which is similar to the principle of the solution hereinabove, so the detailed description thereof may be omitted.

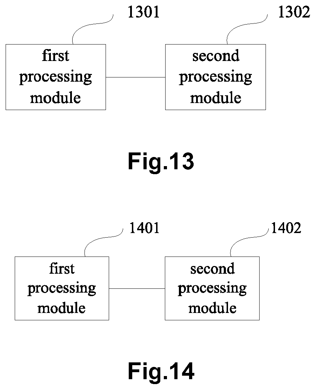

Fig.13 is a schematic view of a second mobile terminal in some embodiments of the present disclosure. As shown in Fig.13, the mobile terminal includes:
a first processing module 1301, configured to determine that a radio link failure occurs between the mobile terminal and the macrocell connected to the mobile terminal;
a second processing module 1302, configured to, in the case that a quality of a radio signal of a small cell connected to the mobile terminal received by the mobile terminal is greater than a predetermined radio signal quality threshold, report to the small cell a notification message notifying that the radio link failure occurs between the mobile terminal and the macrocell connected to the mobile terminal, so as to make the small cell request a mobile management entity in a core network for a patch switch to switch a path from the mobile management entity to the macrocell to a path from the mobile management entity to the small cell; or report to the small cell a notification message notifying the radio link failure occurs between the mobile terminal and the macrocell connected to the mobile terminal, so as to make the small cell request the core network for switching a user plane of the mobile terminal at the macrocell to the small cell and then make the macrocell transmit control plane data of the mobile terminal at the macrocell via the small cell.

Optionally, subsequent to the first processing module determining that a radio link failure occurs between the mobile terminal and the macrocell connected to the mobile terminal, the second processing module is further configured to, in the case that the quality of the radio signal of the small cell connected to the mobile terminal received by the mobile terminal is greater than the predetermined radio signal quality threshold, report to the small cell the notification message notifying that the radio link failure occurs between the mobile terminal and the macrocell connected to the mobile terminal, so as to make the small cell notify the macrocell that the radio link failure occurs between the mobile terminal and the macrocell connected to the mobile terminal.

The second processing module 1302 is further configured to, if the mobile terminal uses a main carrier in the macrocell, report to the small cell the notification message notifying that the radio link failure occurs between the mobile terminal and the main carrier of the macrocell connected to the mobile terminal, so as to make the small cell notify the macrocell that the radio link failure occurs between the mobile terminal and the main carrier of the macrocell connected to the mobile terminal.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

Fig.14 is a schematic view of a microcell controlling device in some embodiments of the present disclosure. The device is configured to control the small cell connected to the mobile terminal. As shown in Fig.14, the device includes:
a first processing module 1401, configured to receive a notification message which is sent by a mobile terminal connected to the small cell and notifies that a radio link failure occurs between the mobile terminal and a macrocell connected to the mobile terminal;
a second processing module 1402, configured to request a mobile management entity in a core network for a patch switch, so as to switch a path from the mobile management entity to the macrocell to a path from the mobile management entity to the small cell; or request the core network for switching a user plane of the mobile terminal at the macrocell to the small cell and then making the macrocell to transmit control plane data of the mobile terminal at the macrocell via the small cell;

The notification message is sent to the small cell by the mobile terminal subsequent to the mobile terminal determining that a quality of radio signal of the small cell received by the mobile terminal is greater than a predetermined radio signal quality threshold.

Optionally, the small cell control device may be a slave base station of the mobile terminal.

Optionally, the second processing module 1402 is further configured to notify, subsequent to receiving a notification message notifying that a radio link failure occurs between the mobile terminal and the macrocell sent by the mobile terminal, the macrocell that the radio link failure occurs between the mobile terminal and the macrocell.

Optionally, the second processing module 1402 is further configured to notify the macrocell that the radio link failure occurs between the mobile terminal and the main carrier of the macrocell subsequent to receiving a notification message notifying that the radio link failure occurs between the mobile terminal and the main carrier of the macrocell sent by the mobile terminal.

Optionally, the second processing module 1402 is further configured to notify the MME that the radio link failure occurs between the mobile terminal and the macrocell connected to the mobile terminal subsequent to requesting the MME in the core network for the patch switch.

Optionally, the radio link failure reason may be any one of the following:
reason I: the mobile terminal fails to access the small cell randomly;
reason II: a retransmission time of the mobile terminal reaches a retransmission time threshold;
reason III: timer T310 or T313 expires.

From the above, the present disclosure provides a mobile terminal communication control method, a control device and a mobile communication system, so as to provide a communication solution in a double connection mode in the case that a radio link failure occurs between a mobile terminal and a macrocell or between a mobile terminal and a small cell, thereby guaranteeing the communication quality of the mobile terminal.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, CD-ROM and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

## Claims

1. A mobile terminal communication control method, performed by a macrocell, the method comprising:
receiving, by the macrocell connected to a mobile terminal, a notification message sent by the mobile terminal and notifying that a radio link failure occurs between the mobile terminal and a small cell connected to the mobile terminal, to determine that a radio link failure occurs between the mobile terminal and the small cell connected to the mobile terminal; and
controlling, by the macrocell, the mobile terminal to reaccess the small cell (Step 403);
**characterized by**:
the step of controlling, by the macrocell, the mobile terminal to reaccess the small cell comprises:
controlling, by the macrocell, the mobile terminal to reaccess the small cell, in case the small cell is a special small cell of the mobile terminal;
wherein the special small cell is configured to control connections between the mobile terminal and other small cells;
subsequent to the receiving, by the macrocell connected to the mobile terminal, the notification message sent by the mobile terminal and notifying that a radio link failure occurs between the mobile terminal and the small cell connected to the mobile terminal, to determine that a radio link failure occurs between the mobile terminal and the small cell connected to the mobile terminal, the method further comprises at least one of the following steps:
reconfiguring a radio resource control connection of the mobile terminal by the macrocell; and
acquiring, by the macro cell, data of the mobile terminal cached at the small cell with which the radio link failure occurs.

2. A macrocell control device connected to a mobile terminal, comprising:
a first processing module (701), configured to receive a notification message sent by the mobile terminal and notifying that a radio link failure occurs between the mobile terminal and a small cell connected to the mobile terminal, to determine that a radio link failure occurs between the mobile terminal and a small cell connected to the mobile terminal; and
a second processing module (702), configured to control the mobile terminal to reaccess the small cell, subsequent to the first processing module (701) determining that the radio link failure occurs between the mobile terminal and the small cell connected to the mobile terminal;
wherein the second processing module (702) is further configured to control the mobile terminal to reaccess the small cell, in case the small cell is a special small cell of the mobile terminal;
wherein the special small cell is configured to control connections between the mobile terminal and other small cells;
**characterized in that** the second processing module (702) is further configured to:
reconfigure a radio resource control connection of the mobile terminal;
acquire data of the mobile terminal cached at the small cell with which the radio link failure occurs.

3. A system comprising at least a mobile terminal, a macrocell and a small cell wherein the mobile terminal is connected to both the macrocell and the small cell, the mobile terminal being **characterized by** comprising:
a first processing module (801), configured to send to the macrocell connected to the mobile terminal a notification message notifying that a radio link failure occurs between the mobile terminal and the small cell connected to the mobile terminal, to enable the macrocell to control the mobile terminal to reaccess the small cell, in case the small cell is a special small cell of the mobile terminal; and
a second processing module (802), configured to make the mobile terminal reaccess the small cell under a control of the macrocell, subsequent to the first processing module notifying the macrocell that the radio link failure occurs between the mobile terminal and the small cell;
said second processing module configured to reconfigure a radio resource control connection of the mobile terminal by the macrocell; and to acquire, by the macro cell, data of the mobile terminal cached at the small cell with which the radio link failure occurs;
wherein the special small cell is configured to control connections between the mobile terminal and other small cells.

## Patentansprüche

1. Kommunikationssteuerverfahren für ein mobiles Endgerät, das von einer Makrozelle durchgeführt wird, wobei das Verfahren umfasst:
Empfangen durch die Makrozelle, die mit einem mobilen Endgerät verbunden ist, einer Benachrichtigungsnachricht, die von dem mobilen Endgerät gesendet wurde und mitteilt, dass eine Störung der Funkverbindung zwischen dem mobilen Endgerät und einer kleinen Zelle, die mit dem mobilen Endgerät verbunden ist, auftritt, um zu bestimmen, dass eine Störung der Funkverbindung zwischen dem mobilen Endgerät und der kleinen Zelle, die mit dem mobilen Endgerät verbunden ist, auftritt; und
Steuern des mobilen Endgeräts durch die Makrozelle, um erneut auf die kleine Zelle zuzugreifen (Schritt 403); **gekennzeichnet dadurch, dass**:
der Schritt des Steuerns des mobilen Endgeräts durch die Makrozelle, um erneut auf die kleine Zelle zuzugreifen, umfasst:
Steuern des mobilen Endgeräts durch die Makrozelle, um erneut auf die kleine Zelle zuzugreifen, falls die kleine Zelle eine spezielle kleine Zelle des mobilen Endgeräts ist;
wobei die spezielle kleine Zelle so konfiguriert ist, dass sie Verbindungen zwischen dem mobilen Endgerät und anderen kleinen Zellen steuert;
nachfolgend auf das Empfangen, durch die Makrozelle, die mit dem mobilen Endgerät verbunden ist, der Benachrichtigungsnachricht, die von dem mobilen Endgerät gesendet wurde und die mitteilt, dass eine Störung der Funkverbindung zwischen dem mobilen Endgerät und der kleinen Zelle, die mit dem mobilen Endgerät verbunden ist, auftritt, um zu bestimmen, dass eine Störung der Funkverbindung zwischen dem mobilen Endgerät und der kleinen Zelle, die mit dem mobilen Endgerät verbunden ist, auftritt, umfasst das Verfahren weiterhin mindestens einen der folgenden Schritte:
Rekonfigurieren einer Funkressourcen-Steuerverbindung des mobilen Endgeräts durch die Makrozelle; und
Erfassen, durch die Makrozelle, von Daten des mobilen Endgeräts, die in der kleinen Zelle, mit der die Störung der Funkverbindung auftritt, zwischengespeichert wurden.

2. Makrozellen-Steuervorrichtung, die mit einem mobilen Endgerät verbunden ist, umfassend:
ein erstes Verarbeitungsmodul (701), das konfiguriert ist, um eine Benachrichtigungsnachricht zu empfangen, die von dem mobilen Endgerät gesendet wurde und mitteilt, dass eine Störung der Funkverbindung zwischen dem mobilen Endgerät und einer mit dem mobilen Endgerät verbundenen kleinen Zelle auftritt, um zu bestimmen, dass eine Störung der Funkverbindung zwischen dem mobilen Endgerät und einer mit dem mobilen Endgerät verbundenen kleinen Zelle auftritt; und
ein zweites Verarbeitungsmodul (702), das konfiguriert ist, um das mobile Endgerät so zu steuern, dass es erneut auf die kleine Zelle zugreift, nachdem das erste Verarbeitungsmodul (701) bestimmt hat, dass die Störung der Funkverbindung zwischen dem mobilen Endgerät und der mit dem mobilen Endgerät verbundenen kleinen Zelle auftritt;
wobei das zweite Verarbeitungsmodul (702) ferner konfiguriert ist, um das Endgerät so zu steuern, dass es erneut auf die kleine Zelle zugreift, falls die kleine Zelle eine spezielle kleine Zelle des Endgeräts ist;
wobei die spezielle kleine Zelle so konfiguriert ist, dass sie Verbindungen zwischen dem mobilen Endgerät und anderen kleinen Zellen steuert;
**dadurch gekennzeichnet, dass** das zweite Verarbeitungsmodul (702) ferner konfiguriert ist zum:
Rekonfigurieren einer Funkressourcen-Steuerverbindung des mobilen Endgerätes;
Erfassen von Daten des mobilen Endgeräts, die in der kleinen Zelle, mit der die Störung der Funkverbindung auftritt, zwischengespeichert wurden.

3. System, umfassend mindestens ein mobiles Endgerät, eine Makrozelle und eine kleine Zelle, wobei das mobile Endgerät sowohl mit der Makrozelle als auch mit der kleinen Zelle verbunden ist, wobei das mobile Endgerät **dadurch gekennzeichnet ist, dass** es umfasst:
ein erstes Verarbeitungsmodul (801), das konfiguriert ist, um an die Makrozelle, die mit dem mobilen Endgerät verbunden ist, eine Benachrichtigungsnachricht zu senden, die anzeigt, dass eine Störung der Funkverbindung zwischen dem mobilen Endgerät und der kleinen Zelle, die mit dem mobilen Endgerät verbunden ist, auftritt, um der Makrozelle zu ermöglichen, das mobile Endgerät zu steuern, um wieder auf die kleine Zelle zuzugreifen, falls die kleine Zelle eine spezielle kleine Zelle des mobilen Endgeräts ist; und
ein zweites Verarbeitungsmodul (802), das konfiguriert ist, um das mobile Endgerät unter einer Steuerung der Makrozelle wieder auf die kleine Zelle zugreifen zu lassen, nachdem das erste Verarbeitungsmodul die Makrozelle benachrichtigt hat, dass die Störung der Funkverbindung zwischen dem mobilen Endgerät und der kleinen Zelle auftritt;
wobei das zweite Verarbeitungsmodul konfiguriert ist, um eine Funkressourcen-Steuerverbindung des mobilen Endgeräts durch die Makrozelle zu rekonfigurieren und um durch die Makrozelle Daten des mobilen Endgeräts zu erfassen, die in der kleinen Zelle zwischengespeichert sind, mit der die Störung der Funkverbindung auftritt;
wobei die spezielle kleine Zelle so konfiguriert ist, dass sie Verbindungen zwischen dem mobilen Endgerät und anderen kleinen Zellen steuert.

## Revendications

1. Procédé de commande de communication d'un terminal mobile, exécuté par une macrocellule, le procédé comprenant :
la réception, par la macrocellule connectée à un terminal mobile, d'un message de notification envoyé par le terminal mobile et la notification qu'une panne de liaison radio se produit entre le terminal mobile et une petite cellule connectée au terminal mobile, pour déterminer qu'une panne de liaison radio se produit entre le terminal mobile et la petite cellule connectée au terminal mobile ; et
la commande, par la macrocellule, du terminal mobile pour réaccéder à la petite cellule (étape 403) ; **caractérisé par** :
l'étape de commande, par la macrocellule, du terminal mobile pour réaccéder à la petite cellule comprend :
la commande, par la macrocellule, du terminal mobile pour réaccéder à la petite cellule, dans le cas où la petite cellule est une petite cellule spéciale du terminal mobile ;
dans lequel la petite cellule spéciale est configurée pour commander les connexions entre le terminal mobile et d'autres petites cellules ;
suite à la réception, par la macrocellule connectée au terminal mobile, du message de notification envoyé par le terminal mobile et la notification qu'une panne de liaison radio se produit entre le terminal mobile et la petite cellule connectée au terminal mobile, pour déterminer qu'une panne de liaison radio se produit entre le terminal mobile et la petite cellule connectée au terminal mobile, le procédé comprend en outre au moins l'une parmi les étapes suivantes :
la reconfiguration d'une connexion de commande de ressources radio du terminal mobile par la macrocellule ; et
l'acquisition, par la macrocellule, de données du terminal mobile mises en cache au niveau de la petite cellule avec laquelle la panne de liaison radio se produit.

2. Dispositif de commande de macrocellule connecté à un terminal mobile, comprenant :
un premier module de traitement (701), configuré pour recevoir un message de notification envoyé par le terminal mobile et la notification qu'une panne de liaison radio se produit entre le terminal mobile et une petite cellule connectée au terminal mobile, pour déterminer qu'une panne de liaison radio se produit entre le terminal mobile et une petite cellule connectée au terminal mobile ; et
un second module de traitement (702), configuré pour commander au terminal mobile de réaccéder à la petite cellule, suite à la détermination par le premier module de traitement (701) que la panne de liaison radio se produit entre le terminal mobile et la petite cellule connectée au terminal mobile ;
dans lequel le second module de traitement (702) est en outre configuré pour commander le terminal mobile pour réaccéder à la petite cellule, dans le cas où la petite cellule est une petite cellule spéciale du terminal mobile ;
dans lequel la petite cellule spéciale est configurée pour commander les connexions entre le terminal mobile et d'autres petites cellules ;
**caractérisé en ce que** le second module de traitement (702) est en outre configuré pour :
reconfigurer une connexion de commande de ressources radio du terminal mobile ;
acquérir des données du terminal mobile mises en cache au niveau de la petite cellule avec laquelle la panne de liaison radio se produit.

3. Système comprenant au moins un terminal mobile, une macrocellule et une petite cellule dans lequel le terminal mobile est connecté à la fois à la macrocellule et à la petite cellule, le terminal mobile étant **caractérisé en ce qu'**il comprend :
un premier module de traitement (801), configuré pour envoyer à la macrocellule connectée au terminal mobile un message de notification notifiant qu'une panne de liaison radio se produit entre le terminal mobile et la petite cellule connectée au terminal mobile, pour permettre à la macrocellule de commander le terminal mobile pour réaccéder à la petite cellule, dans le cas où la petite cellule est une petite cellule spéciale du terminal mobile ; et
un second module de traitement (802), configuré pour faire réaccéder le terminal mobile à la petite cellule sous une commande de la macrocellule, suite à la notification par le premier module de traitement à la macrocellule que la panne de liaison radio se produit entre le terminal mobile et la petite cellule ;
ledit second module de traitement configuré pour reconfigurer une connexion de commande de ressources radio du terminal mobile par la macrocellule ; et pour acquérir, par la macrocellule, des données du terminal mobile mises en cache au niveau de la petite cellule avec laquelle la panne de liaison radio se produit ;
dans lequel la petite cellule spéciale est configurée pour commander les connexions entre le terminal mobile et d'autres petites cellules.
